# EUROPEAN PATENT APPLICATION

(11) **EP 1 967 612 A1**
(43) Date of publication of application: **10.09.2008**
(21) Application number: 06843714.4
(22) Date of filing: 26.12.2006
(51) Int. Cl.: C23C 26/00, B05D 7/24, B32B 15/08, C21D 9/46

(54) **ELECTROMAGNETIC STEEL SHEET HAVING INSULATING COATING FILM AND METHOD FOR PRODUCING SAME**

(30) Priority: 28.12.2005 JP 2005377067; 22.12.2006 JP 2006345946
(71) Applicant: JFE Steel Corporation, Tokyo, 100-0011 (JP)
(72) Inventor: SHIGEKUNI, Tomofumi, Tokyo 100-0011 (JP); SASHI, Kazumichi, Tokyo 100-0011 (JP); KOHNO, Masaaki, Tokyo 100-0011 (JP); KOMORI, Yuka, Tokyo 100-0011 (JP)
(74) Representative: Grünecker, Kinkeldey, Stockmair & Schwanhäusser Anwaltssozietät
(86) International application number: PCT/JP2006/326341
(87) International publication number: WO 2007/074928

(57) **Abstract**

The electrical steel sheet having an insulation coating having excellent corrosion resistance and punchability even without containing chromium is prepared by applying a coating liquid on the surface of an electrical steel sheet, followed by baking the applied coating liquid, which coating liquid contains 100 parts by weight of polysiloxane polymer prepared by copolymerizing polysiloxane with one or more resins selected from the group consisting of acrylic resin, styrene resin, vinyl acetate resin, polyester resin, urethane resin, polyethylene resin, polypropylene resin, polyamide resin, polycarbonate resin, phenol resin, alkyd resin, and epoxy resin, and 1 to 50 parts by weigh of one or more compounds selected from the group consisting of melamine, isocyanate, silane coupling agent, and oxadoline, as the cross-linking agent.

## Description

### TECHNICAL FIELD

The present invention relates to an electrical steel sheet having an insulation coating, and specifically relates to an electrical steel sheet having an insulation coating which does not contain chromium, being used mainly in motors and transformers, friendly to environment, free from toxic substances such as hexavalent chromium in the coating and also in the coating liquid for forming the coating.

### BACKGROUND ART

Insulation coating on an electrical steel sheet used for motors, transformers, and the like is requested to have not only interlaminar resistance but also varieties of characteristics such as convenience during working and forming and stability during storage and use. Furthermore, since electrical steel sheets are used in varieties of applications, there are developed various kinds of insulation coating responding to each application.

For example, when an electrical steel sheet is treated by punching, shearing, bending, and the like, the residual strain deteriorates the magnetic characteristics. To recover the deteriorated magnetic characteristics, stress relieving annealing is often applied to thus treated electrical steel sheet at an approximate temperature range from 750°C to 850°C. On applying the stress relieving annealing, the insulation coating has to endure the annealing treatment.

The insulation coating is roughly grouped into three kinds: (a) inorganic coating which emphasizes weldability and heat resistance, and endures the stress relieving annealing, (excluding organic resin, in principle); (b) semi-organic coating comprising an inorganic compound as the basis and containing an organic resin, which aims to have both punchability and weldability, and endures the stress relieving annealing; and (c) organic coating for special applications, which cannot be treated by stress relieving annealing. As of these, the ones for general use, which endure the stress relieving annealing, are (a) and (b) which are the coatings containing inorganic matter, both of which contain chromium compound in the coating. Particularly, the chromate-based insulation coating of (b) type, containing organic resin, is widely used owing to the considerable improvement of punchability compared with the inorganic-based insulation coating.

For example, Examined Japanese Patent Publication No. 60-36476 describes an electrical steel sheet having an electrical insulation coating, which is manufactured by applying a coating liquid on the surface of a steel sheet, followed by baking by a known method, which coating liquid is prepared by mixing a bichromate-based aqueous solution containing at least one kind of bivalent metal with 5 to 120 parts by weight of solid content of a resin emulsion (vinyl acetate and VeoVa (TM) at a ratio ranging from 90/10 to 40/60), and 10 to 60 parts by weight of an organic reducing agent, to 100 parts by weight of CrO₃ in the aqueous solution.

Most of that type of chromate-based coatings for electric steel sheet contains trivalent chromium as the steel sheet products, raising no toxicity problem. Since, however, toxic hexavalent chromium has to be used in the stage of coating liquid (coating liquid applied on the steel sheet to form an insulation coating), there is required to observe strict handling regulations as well as establishing satisfactory apparatus to secure good workplace environment.

Under the present state and responding to the recent increasing concern about the environment, also the field of electrical steel sheet faces the request of customers to supply products having insulation coating free from chromium.

As the technology using a main component other than chromic acid, many kinds of semi-organic insulation coatings containing inorganic colloid such as silica as the main component are disclosed. Owing to unnecessariness of handling toxic hexavalent chromium solution, those semi-organic insulation coatings containing inorganic colloid as the main component are highly advantageously used in view of environment. For instance, Japanese Patent Laid-Open No. 10-34812 discloses a method to improve the corrosion resistance of inorganic-colloid-based coating by regulating the quantity of Cl and S in the resin/silica coating to a specified level or below. The method improves the corrosion resistance of the product sheet in a humidity cabinet test environment. However, the corrosion resistance thereof under severe conditions such as salt spray cannot reach the level of the corrosion resistance of the case applying Cr-containing insulation coating. Furthermore, with the addition of silica, punchability also cannot reach the good level of the case applying Cr-containing insulation coating, as in the case of corrosion resistance.

### DISCLOSURE OF THE INVENTION

### [PROBLEM TO BE SOLVED BY THE INVENTION]

The electrical steel sheet is required to have wet corrosion resistance and salt spray corrosion resistance, each under normal temperature environment, and corrosion resistance after high temperature treatment (stress relieving annealing) at 700°C or above. Different from surface-treated steel sheet with plating of zinc, tin, or the like in order to have sacrifice corrosion prevention in a corrosive environment, the electrical steel sheet exposes the steel portion to atmosphere. In this case, it is important to suppress the cathodic corrosion by providing high grade barrier property as a coating characteristic, thus by rejecting water, oxygen, chlorine, and the like becoming the cause element of corrosion. To provide that high barrier characteristic, it is preferred to have continuous and dense structure such as that of inorganic coating.

On the other hand, to obtain good punchability, or to suppress wear of mold after successive punching cycles, which wear is drawback in punching, the addition of lubricant component to the coating is effective. However, when the coating is a mixed coating of inorganic and organic resins to establish both the corrosion resistance and the workability, the continuity of coating deteriorates, and the corrosion resistance deteriorates.

Responding to the above conditions, an object of the present invention is to provide an electrical steel sheet having an insulation coating which has performance equivalent to or higher than that of Cr-containing insulation coating even as an insulation coating containing an inorganic matter free from Cr as the main component, giving excellent corrosion resistance and punchability.

### [MEANS TO SOLVE THE PROBLEM]

To solve the above problem, the inventors of the present invention conducted detail study and derived the following findings.

The corrosion resistance of product sheets with silica-based chromate-free coating cannot fully be improved even by the currently proposed decreased amount of impurities such as Cl⁻ and SO₄²⁻, and the corrosion resistance thereof becomes nonuniform depending on the manufacturing conditions. To this point, the inventors of the present invention variously investigated the causes.

The investigation of the inventors of the present invention confirmed that many cases of deteriorating the corrosion resistance are accompanied with cracks in the coating. That is, since colloidal silica does not allow the silica to form a three-dimensional network (three-dimensional structure) at a baking temperature ranging from about 200°C to about 300°C, thus the silica itself has no film-formability, which is presumably the cause of crack generation in the coating and of nonuniformily of corrosion resistance depending on the manufacturing conditions.

From the above findings, it was found that the formation of three-dimensional network of -Si-O-Si-, or three-dimensional cross-linking, is important to form a coating having good corrosion resistance, and that the problem is solved by a mean of forming the above three-dimensional network by polymerizing the polysiloxane with an organic resin (a polymer containing carbon element). Furthermore, when the polysiloxane polymer is three-dimensionally cross-linked using a cross-linking agent such as melamine, isocyanate, silane coupling agent, and oxadoline, it was found that an electrical steel sheet having an insulation coating having more excellent characteristics in relation to the corrosion resistance after stress relieving annealing is obtained. The embodiments are described below.

### (I) Forming composite material integrating inorganic component with organic component

The inorganic component and the organic component (organic resin) are brought into composite (copolymerized) in the step of synthesizing the resin, instead of conventional technology in which the inorganic component and the organic component are simply mixed together in the coating liquid. That is, polysiloxane (inorganic component) and one or more of organic resins such as acrylic resin are copolymerized, thus obtaining the polysiloxane polymer. Since, in the polysiloxane polymer (inorganic composite resin), the silanol group (-SiOH) of polysiloxane and the hydroxyl group (-OH) of organic resin are dehydrated-condensed to form covalent bond, this is a composite having strongly bonding the inorganic component with the organic component. The polysiloxane polymer has hardness and barrier performance of inorganic properties, and flexibility and workability of organic properties.

### (II) Forming three-dimensional network (three-dimensional cross-linking)

For further improving the barrier performance, the polysiloxane polymer is brought into three-dimensional cross-linking via a cross-linking agent. In concrete terms, cross-linking is conducted using one or more cross-linking agents selected from the group consisting of melamine, isocyanate, silane coupling agent, and oxadoline, which show reactivity with both the polar groups of hydroxyl group in the organic resin and silanol group in the polysiloxane portion.

The present invention has been perfected on the basis of the above findings, and the essence of the present invention is the following.
(1) An electrical steel sheet having an insulation coating prepared by applying a coating liquid on the surface of an electrical steel sheet, followed by baking, which coating liquid contains 100 parts by weight of polysiloxane polymer prepared by copolymerizing polysiloxane with one or more resins selected from the group consisting of acrylic resin, styrene resin, vinyl acetate resin, polyester resin, urethane resin, polyethylene resin, polypropylene resin, polyamide resin, polycarbonate resin, phenol resin, alkyd resin, and epoxy resin, as the organic resin, and 1 to 50 parts by weight in total of one or more compounds selected from the group consisting of melamine, isocyanate, silane coupling agent, and oxadoline, as the cross-linking agent.
(2) The electrical steel sheet having the insulation coating according to (1), wherein the insulation coating contains one or more compounds selected from the group consisting of silica, silicate, alumina, titania, tin oxide, cerium oxide, antimony oxide, tungsten oxide, and molybdenum oxide, as the inorganic compound, by an amount of 75% by mass or less to the total solid content in the coating.
(3) The electrical steel sheet having the insulation coating according to (1) or (2), wherein the blending ratio of the polysiloxane to the total solid content in the insulation coating is 10% by mass or more and 90% by mass or less as SiO₂.
(4) A method for manufacturing an electrical steel sheet having an insulation coating, having the steps of: applying a coating liquid on the surface of an electrical steel sheet, which coating liquid contains 100 parts by weight of polysiloxane polymer prepared by copolymerizing polysiloxane with one or more resins selected from the group consisting of acrylic resin, styrene resin, vinyl acetate resin, polyester resin, urethane resin, polyethylene resin, polypropylene resin, polyamide resin, polycarbonate resin, phenol resin, alkyd resin, and epoxy resin, as the organic resin, and 1 to 50 parts by weigh of one or more compounds selected from the group consisting of melamine, isocyanate, silane coupling agent, and oxadoline, as the cross-linking agent; and baking the electrical steel sheet with the coating liquid applied on the electrical steel sheet.

### BEST MODE FOR CARRYING OUT THE INVENTION

The present invention is described in detail in the following.

The electrical steel sheet according to the present invention is a steel sheet having an insulation coating. The insulation coating contains a composite resin (polysiloxane polymer) prepared by copolymerizing polysiloxane with an organic resin (polymer containing carbon element) in advance. The chemical composition is the most important requirement of the present invention. With that insulation coating, there are provided corrosion resistance (specifically corrosion resistance of annealed sheet) and punchability equivalent to or higher than those of the electrical steel sheet having a Cr-containing insulation coating.

### <ELECTRICAL STEEL SHEET>

The description begins with the electrical steel sheet applied in the present invention.

The electrical steel sheet (also referred to "electrical iron sheet") before forming the coating, which can be used in the present invention, may be the one having any composition, not specifically limited, if only it is a steel sheet (iron sheet) which is adjusted to have at least the specific resistivity to obtain the desired magnetic characteristics (such as low iron loss). Specifically preferred one is to apply to medium to high grade electrical steel sheets containing sole Si or (Si + Al) in a range from about 0.1 to about 10.0% by mass, and giving about W_{15/50} ≤ 5.0 W/kg.

The surface of the electrical steel sheet on which the insulation coating is to be formed may be subjected to arbitrary preliminary treatment such as degreasing by alkali or the like, pickling by hydrochloric acid, sulfuric acid, phosphoric acid, and the like, intensifying, and magnetic domain refining, and may be as-manufactured surface (untreated).

Although the forming of a third layer between the insulation coating and the steel sheet surface is not necessarily required, the third layer may be formed at need. For example, ordinary manufacturing method may form an oxide film of the metal of steel sheet between the insulation coating and the steel sheet surface. The step of removing the oxide film can be eliminated. Although a forsterite film may be formed depending on the manufacturing method, the step of removing the film can be eliminated.

### <INSULATION COATING>

Next is the description about the insulation coating of the present invention, applied on the surface of the above steel sheet.

The insulation coating according to the present invention is obtained by applying a coating liquid containing polysiloxane and an organic resin, which are the essential components described below, on the surface of the electrical steel sheet, followed by baking. In the preparation step, a polysiloxane polymer prepared by copolymerizing the polysiloxane with the organic resin in advance is added to the coating liquid.

### • Polysiloxane

Polysiloxane is a polymer which has -Si-O- (siloxane bond) in the main molecular chain. The polysiloxane is copolymerized with an organic resin in advance. The copolymerization provides covalent bond created by dehydration and condensation of silanol group (-SiOH) of the polysiloxane and hydroxyl group (-OH) or silanol group (-SiOH), (in the case that silanol group is introduced in the organic resin, in advance), of the organic resin, thereby providing composite of strongly bonding the inorganic component with the organic component. That is, since the inorganic component and the organic component form a three-dimensional network in advance, there can be obtained homogeneous coating free from cracks, and can be formed a coating having good corrosion resistance.

The blending ratio of polysiloxane to the total solid content in the insulation coating, (or the total coating amount after baking), is preferably adjusted to a range of 10% by mass or more and 90% by mass or less as SiO₂. If the blending ratio thereof is less than 10% by mass, the percentage of remained coating after the stress relieving annealing becomes small so that the removal property of stiction deteriorates in some cases. When the blending ratio of polysiloxane increases, the coating becomes strong. If, however, the blending ratio thereof exceeds 90% by mass, the flexibility becomes insufficient, and the corrosion resistance may deteriorate depending on the manufacturing conditions. The blending ratio of polysiloxane to the total coating amount after the stress relieving annealing significantly increases owing to the decomposition of organic component, (50%), thus the blending ratio thereof after the stress relieving annealing is not required to stay within the above preferable range.

On assessing the amount of polysiloxane, the term "as SiO₂" (i. e. in terms of SiO₂) means that the content of SiO₂ is calculated on the assumption that all the contained Si forms SiO₂. For example, when sole Si amount is measured, the amount is converted into the amount of "SiO₂", and the ratio of the converted amount to the total coating is determined.

Although the particle size of polysiloxane is not specifically limited, a preferable size range is larger than 0.03 µm and smaller than 0.5 µm. That is, small particle size deteriorates the stability of solution so that the size is preferably regulated to larger than 0. 03 µm in view of operability. Since smaller particle size is more preferred from the point of coating appearance, the size is preferably adjusted to 0.5 µm or smaller. The particle size is determined by observing particles under electron microscope or the like to measure the maximum diameter and the minimum diameter for individual particles, and by calculating the average of them.

### Organic resin (polymer containing carbon element)

Regarding the organic resin which is copolymerized with the above polysiloxane in the present invention, the following resins are applicable: acrylic resin, styrene resin, vinyl acetate resin, polyester resin, urethane resin, polyethylene resin, polypropylene resin, polyamide resin, polycarbonate resin, phenol resin, alkyd resin, and epoxy resin. One or more resins selected from above-given resins are copolymerized with the polysiloxane. On forming a three-dimensional network by forming cross-links in the polysiloxane polymer, which is prepared by copolymerizing the polysiloxane with the organic resin, via -Si-O-C- bond or -Si-O-Si-C- bond, it is more preferable to have a functional group bondable to the side chain of the skeleton of organic resin.

The blending ratio of polymer having carbon element to the total solid content in the insulation coating is preferably regulated to 0.1 times or more the blending ratio of polysiloxane, (above given SiO₂ converted value).

### · Polysiloxane polymer

The degree of polymerization of the polysiloxane polymer is in an arbitrary range for applying without raising problem if only the degree provides the coating liquid.

The particle size of polysiloxane polymer is preferably adjusted to larger than 0.04 µm and smaller than 0.6 µm. If the size is smaller than 0.04 µm, the stability of solution deteriorates. If the size is larger than 0.6 µm, the coating becomes rough and the appearance deteriorates.

### · Cross-linking agent

According to the present invention, there is further added 1 to 50 parts by weight of cross-linking agent as the total of one or more of melamine, isocyanate, silane coupling agent, and oxadoline to 100 parts by weight of the polysiloxane polymer. Addition of cross-linking agent induces cross-linking between polysiloxane polymers, thus forming further dense coating to improve corrosion resistance, specifically the corrosion resistance after the stress relieving annealing. If the added amount of cross-linking agent as the total is less than 1 part by weight, the effect of cross-linking cannot be attained, and the corrosion resistance after the stress relieving annealing becomes insufficient. If the added amount thereof exceeds 50 parts by weight, non-reacted cross-linking agent remains, which deteriorates the coating adhesion property and the hardness of coating.

The above-described means provides the characteristics aimed in the present invention. Adding to the above components, the following-given additives and other inorganic compounds and organic compounds can be added to achieve the object described below within a range not to deteriorate the coating property and effect of the present invention. On adding the following-given additives and other inorganic compounds and organic compounds, addition of excess amount thereof deteriorates the coating performance so that it is preferable to adjust the total amount of additives and other inorganic compounds and organic compounds to about 75% by mass or less to the total coating amount of the insulation coating according to the present invention, and more preferably about 50% by mass or less.

### • Additive

Applicable additive includes known surface-active agent, rust-preventive agent, lubricant, and defoaming agent. The adding amount of the additive is preferably adjusted to about 30% by mass or less to the total solid content of the coating.

### • Other inorganic compound and organic compound

The insulation coating according to the present invention can contain other inorganic compound and/or organic compound which is not copolymerized with polysiloxane at a level not deteriorates the effect of the prevent invention. As for the inorganic compound, for example, other oxide (sol) can be added if the liquid stability is assured. Applicable oxide (sol) includes silica(sol), (silica or silica sol, same is applied in the following), alumina(sol), titania(sol), tin oxide(sol), cerium oxide sol, antimony oxide(sol), tungsten oxide(sol), and molybdenum oxide(sol). For the case of specifically small blending ratio of polysiloxane, the addition of inorganic compound is preferred to improve adhesion property, corrosion resistance, and removal property of stiction of annealed sheet. The inorganic compound is added preferably by an amount of 75% by mass or less, more preferably 40% by mass or less, to the total solid content in the coating. Preferably the adding amount thereof is 5% by mass or more, and more preferably 10% by mass or more.

The organic compound which is not copolymerized with polysiloxane includes an organic resin similar to the above-described organic resin which is copolymerized with polysiloxane.

The present invention aims to obtain good coating characteristics without adding chromium compound. Therefore, from the point of preventing the environmental pollution caused by the manufacturing process and by the products, preferably the insulation coating of the present invention substantially does not contain chromium. The allowable chromium amount as impurity is preferably regulated to 0.1% by mass or less as CrO₃ to the total mass of solid content (total coating amount) in the insulation coating.

### <MANUFACTURING METHOD>

The following is the description about the method for manufacturing the electrical steel sheet having the insulation coating according to the present invention.

The preliminary treatment for the electrical steel sheet used as the starting material of the present invention is not specifically limited. Non-preliminary treatment or preliminary treatment is applicable. Preferred preliminary treatment includes degreasing by alkali or the like, and pickling by hydrochloric acid, sulfuric acid, phosphoric acid, and the like.

On the steel sheet, there is applied a coating liquid which contains above-described polysiloxane and the cross-linking agent. There are several known applicable methods of copolymerization to obtain the polysiloxane polymer, including the method of copolymerization of monomers, the method of preparing a polymer of one of the monomers, followed by copolymerizing the polymer with other monomer, and the method using one copolymer as the basis, while polymerizing other monomer or other copolymer as a branch.

After that, baking treatment is given to the surface of the electrical steel sheet applied with the above coating liquid, thus forming the insulation coating on the electrical steel sheet. The treatment provides formation of dense and strong three-dimensional network in the coating.

At this step, the coating liquid preferably has the blending ratio of polysiloxane within a range from 10 to 90% by mass as SiO₂ to the total solid content. As described above, the blending ratio thereof of less than 10% by mass results in reduced percentage of remained coating after the stress relieving annealing, which may deteriorate the removal property of stiction. When the blending ratio of polysiloxane increases, the coating becomes strong. If, however, the blending ratio thereof exceeds 90% by mass, the flexibility becomes insufficient, and the corrosion resistance may deteriorate depending on the manufacturing conditions.

The raw material of the coating to be applied on the electrical steel sheet is preferably aqueous or oily material of paste or liquid type. From the point not to increase unnecessarily the coating thickness (coating weight), however, the raw material thereof is preferably of liquid type with the basis of water or organic solvent. In the following description, the term "coating liquid" also includes the paste type in principle.

Applicable method for applying the insulation coating adopts varieties of apparatuses used generally in industries, such as roll coater, flow coater, spray, knife coater, and bar coater.

Also for the baking method, ordinarily applied ones can be used, such as hot air type, infrared heating type, and induction heating type. The baking temperature may be at an ordinary level. To avoid thermal decomposition of the resin, however, the baking temperature is preferably selected to 350°C or below, and more preferable range is 150°C or above and 300°C or below.

### <COATING WEIGHT OF INSULATION COATING>

Although the coating weight of the insulation coating is not specifically limited, it is preferred to regulate the range from 0.05 g/m² or more to 10 g/m² or less per one coating side, and more preferably from 0.1 g/m² or more to 10 g/m² or less per one coating side. If the coating weight thereof is less than 0.05 g/m², industrial means is difficult to attain uniform application, and in some cases, stable punchability and corrosion resistance cannot be attained. If the coating weight thereof exceeds 10 g/m², further improvement of coating performance cannot be obtained, and economy may be lost. The measurement of coating weight is conducted on the steel sheet which completed baking treatment and does not receive stress relieving annealing, and the measurement can adopt the weight method in which only the coating is dissolved in hot-alkali or the like, and the weight change before and after dissolving is determined.

Preferred range of coating weight after the stress relieving annealing is from about 0.01 g/m² or more to about 9. 0 g/m² or less.

The insulation coating according to the present invention is preferably formed on both sides of the steel sheet. Depending on the object, however, the insulation coating may be formed only on one side thereof. That is, depending on the object, the insulation coating according to the present invention is formed only on one side of the steel sheet, while other side is coated by other insulation coating, or other side is left non-coating.

### <USE EMBODIMENTS>

The applications of the electrical steel sheet having the insulation coating according to the present invention are not specifically limited. To utilize the heat resistance of the coating, however, most suitable application is to use the electrical steel sheet being subjected to stress relieving annealing at an approximate temperature range from 750°C to 850°C. For example, specifically suitable use is the manufacture of laminated iron core by punching electrical steel sheets, and by applying stress relieving annealing to them, then by laminating them.

### [EXAMPLES]

### (EXAMPLE 1)

The effect of the present invention is described in detail referring to the examples. However, the present invention is not limited to these examples.

As the electrical steel sheet, there was adopted a fully processed electrical steel sheet which contained the steel components of 0.45% by mass Si, 0.25% by mass Mn, and 0.48% by mass Al, and which was treated by finish annealing having a sheet thickness of 0.5 mm. The coating liquid was prepared by adding the respective cross-linking agents given in Tables 1 and 3 to the polysiloxane polymers obtained by copolymerizing, in advance, polysiloxane with the respective organic resins under the respective conditions given in Tables 1 and 3. Thus prepared coating liquid was applied on the surface of the respective electrical steel sheets using roll coater. The coated steel sheets were baked in a hot-air furnace at a baking temperature of 230°C as the peak metal temperature, thus prepared the respective specimens. For some of Examples and Comparative Examples, the chemicals given in Tables 1 and 3 were added as the component other than the polysiloxane polymer.

For thus prepared specimens (electrical steel sheets having insulation coating), the coating was dissolved in a boiling 50% NaOH aqueous solution, and the coating weight of the insulation coating was determined using the above-described weight method.

For thus obtained electrical steel sheets having insulation coating, the following-described coating characteristics were determined and evaluated.

### <CORROSION RESISTANCE - PRODUCT SHEET 1>

To the specimens, humidity cabinet test (50°C, higher than 98% RH (relative humidity)) was given to evaluate the red rust generation rate after 48 hours by visual observation in terms of area percentage.

### (JUDGMENT CRITERION)

A: Red rust area percentage: from 0% to less than 20%
B: Red rust area percentage: from 20% to less than 40%
C: Red rust area percentage: from 40% to less than 60%
D: Red rust area percentage: from 60% to 100%

### <CORROSION RESISTANCE - PRODUCT SHEET 2>

To the specimens, salt spray test (35°C) specified by JIS was given to evaluate the red rust generation rate after 5 hours by visual observation in terms of area percentage.

### (JUDGMENT CRITERION)

A: Red rust area percentage: from 0% to less than 25%
B: Red rust area percentage: from 25% to less than 50%
C: Red rust area percentage: from 50% to less than 75%
D: Red rust area percentage: from 75% to 100%

### <CORROSION RESISTANCE AFTER THE STRESS RELIEVING ANNEALING (CORROSION RESISTANCE - ANNEALED SHEET)>

To the specimens, annealing was given in nitrogen atmosphere under a condition of 750°C for 2 hours. To thus obtained annealed sheets, constant temperature and humidity test (50°C and 80% RH) was given to evaluate the red rust generation rate after 14 days by visual observation in terms of area percentage.

### (JUDGMENT CRITERION)

AA: Red rust area percentage: from 0% to less than 5%
A: Red rust area percentage: from 5% to less than 20%
B: Red rust area percentage: from 20% to less than 40%
C: Red rust area percentage: from 40% to less than 60%
D: Red rust area percentage: from 60% to 100%

### <ADHESION PROPERTY>

To (i) the specimens and to (ii) the annealed sheets treated by annealing in nitrogen atmosphere under a condition of 750°C for 2 hours, the bending and straightening test was given at 20 mmϕ and 180°, thereby evaluated the adhesion property by visual observation in terms of coating peeling rate.

### (JUDGMENT CRITERION)

A: No peeling occurred.
B: Peeling rate is less than 20%.
C: Peeling rate is 20% or more and less than 40%.
D: Peeling rate is 40% or more to entire area peeling.

### <SOLVENT RESISTANCE>

A solvent (hexane) was impregnated in absorbent cotton. Let the impregnated cotton rub back and forth by five times on the surface of the specimen. The change in appearance after that was visually observed.

### (JUDGMENT CRITERION)

A: No change occurred.
B: Very little change occurred.
C: Slightly discolored.
D: Significant change occurred.

### <FLAW RESISTANCE>

An electrical steel sheet was sheared to give 20 µm in bur height. A weight of 20 mm in inner diameter and 500 g of weight was placed on the electrical steel sheet. Let the electrical steel sheet with the weight rub back and forth by three times in the horizontal direction on the surface of the test steel sheet. The generated flaw was visually evaluated.

### (JUDGMENT CRITERION)

A: No change occurred.
B: Very little change occurred.
C: Slightly discolored.
D: Significant change occurred.

### <PUNCHABILITY>

With a 15 mmϕ steel die, the specimen was punched repeatedly until the bur height reached 50 µm. The evaluation was given by the number of punch cycles at the 50 µm height.

### (JUDGMENT CRITERION)

A: One million cycles or more
B: 500 thousand cycles or more and less than one million cycles
C: 100 thousand cycles or more and less than 500 thousand cycles
D: less than 100 thousand cycles

### <REMOVAL PROPERTY OF STICTION>

Ten sheets of specimens each having 50 mm square size were stacked. Annealing was given to the stacked specimens while applying a load (200 g/cm²) in nitrogen atmosphere under a condition of 750°C for 2 hours. Then, a weight of 500 g was dropped onto the specimens (steel sheets), and the dropping height that induced break of the specimens into five segments was determined.

### (JUDGMENT CRITERION)

A: 10 cm or less
B: more than 10 cm and not more than 15 cm
C: more than 15 cm and not more than 30 cm
D: more than 30 cm

Tables 2 and 4 show the results of above tests.

**Table 1**

| | Polysiloxane polymer | | Cross-linking agent | | Other | | Coating weight (g/m²) |
|---|---|---|---|---|---|---|---|
| | Polymer resin | Blending ratio of polysiloxane in the polymer resin (%) (as SiO₂) | Kind of chemicals | Blending ratio⁽⁴⁾ | Kind of chemicals | Blending ratio⁽⁴⁾ | |
| Example 1 | Urethane | 20 | Melamine⁽¹⁾ | 10 | - | - | 0.7 |
| Example 2 | Urethane | 30 | Isocyanate | 15 | - | - | 0.8 |
| Example 3 | Urethane | 50 | Epoxy-based silane coupling agent⁽²⁾ | 20 | - | - | 0.9 |
| Example 4 | Urethane | 70 | Oxadoline | 30 | - | - | 1.0 |
| Example 5 | Acrylic | 25 | Epoxy-based silane coupling agent⁽²⁾ | 15 | - | - | 0.8 |
| Example 6 | Acrylic | 75 | Epoxy-based silane coupling agent⁽²⁾ | 25 | - | - | 0.6 |
| Example 7 | Vinyl acetate | 40 | Oxadoline | 30 | - | - | 0.7 |
| Example 8 | Vinyl acetate | 80 | Isocyanate | 10 | - | - | 0.8 |
| Example 9 | Polyester | 70 | Melamine⁽¹⁾ | 20 | - | - | 0.3 |
| Example 10 | Alkyd | 70 | Isocyanate | 20 | - | - | 0.5 |
| Example 11 | Epoxy | 70 | Epoxy-based silane coupling agent⁽²⁾ | 20 | - | - | 0.7 |
| Example 12 | Polyethylene | 70 | Oxadoline | 20 | - | - | 0.7 |
| Example 13 | Polypropylene | 70 | Epoxy-based silane coupling agent⁽²⁾ | 20 | - | - | 0.8 |
| Example 14 | Polyamide | 70 | Epoxy-based silane coupling agent⁽²⁾ | 20 | - | - | 0.6 |
| Example 15 | Phenol | 70 | Oxadoline | 20 | - | - | 0.7 |
| Example 16 | Polycarbonate | 70 | Isocyanate | 20 | - | - | 0.7 |
| Example 17 | Urethane | 20 | Melamine⁽¹⁾ | 10 | Silica sol (20nm) | 50 | 0.5 |
| Example 18 | Urethane | 30 | Isocyanate | 15 | Silica sol (10nm) | 120 | 0.3 |
| Example 19 | Acrylic | 25 | Epoxy-based silane coupling agent(2) | 15 | Silica sol (10nm) | 100 | 1.6 |
| Example 20 | Acrylic | 75 | Epoxy-based silane coupling agent⁽²⁾ | 25 | Silica sol (10nm) | 70 | 0.7 |
| Example 21 | Epoxy | 70 | Epoxy-based silane coupling agent(2) | 20 | Silica sol (10nm) | 240 | 1.8 |
| Example 22 | Epoxy | 70 | Epoxy-based silane coupling agent(3) | 20 | Silica sol (10nm) | 240 | 1.8 |

| | | | | | | | |
|---|---|---|---|---|---|---|---|
| (1) Methylated melamine (Cymel 303, manufactured by Cyanamid Japan Ltd.) (2) γ-glycydoxy-propyltrimethoxysilane (epoxy-based) (3) N-2-(aminoethyl)-3-aminopropyltrimethoxysilane (amine-based) (4) Added amount (parts by weight) to 100 parts by weight of solid content of the polysiloxane polymer | | | | | | | |

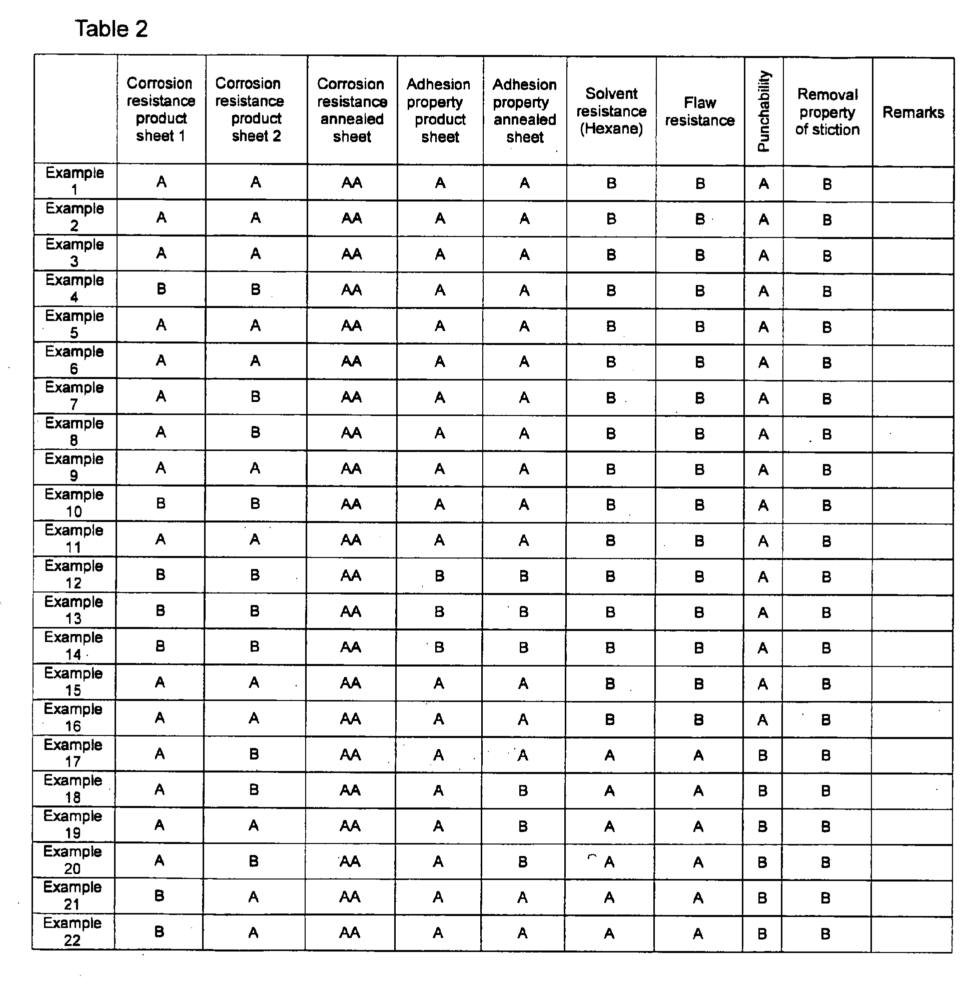

**Table 3**

| | Polysiloxane polymer | | Cross-linking agent | | Other | | Coating weight (g/m²) |
|---|---|---|---|---|---|---|---|
| | Polymer resin | Blending ratio of polysiloxane in the polymer resin (%) (as SiO₂) | Kind of chemicals | Blending ratio⁽⁴⁾ | Kind of chemicals | Blending ratio⁽⁴⁾ | |
| Example 23 | Acrylic | 50 | Isocyanate | 20 | Na silicate | 50 | 2.5 |
| Example 24 | Acrylic | 40 | Melamine⁽¹⁾ | 20 | K silicate | 50 | 0.8 |
| Example 25 | Urethane | 50 | Isocyanate | 30 | Li silicate | 10 | 1.2 |
| Example 26 | Urethane | 50 | Epoxy-based silane coupling agent⁽²⁾ | 40 | Alumina sol | 70 | 1.6 |
| Example 27 | Acrylic | 50 | Epoxy-based silane coupling agent⁽²⁾ | 40 | Titania sol | 25 | 0.8 |
| Example 28 | Epoxy | 50 | Epoxy-based silane coupling agent⁽²⁾ | 50 | Tin sol | 65 | 0.3 |
| Example 29 | Acrylic | 50 | Melamine⁽¹⁾ | 20 | Cerium sol | 70 | 2.0 |
| Example 30 | Epoxy | 50 | Melamine⁽¹⁾ | 15 | Antimony sol | 25 | 0.4 |
| Example 31 | Urethane | 50 | Melamine⁽¹⁾ | 10 | Tungsten sol | 15 | 0.7 |
| Example 32 | Urethane | 50 | Isocyanate | 15 | Molybdenum sol | 280 | 1.5 |
| Example 33 | Acrylic | 5 | Epoxy-based silane coupling agent⁽²⁾ | 15 | - | - | 4.0 |
| Example 34 | Acrylic | 95 | Epoxy-based silane coupling agent⁽²⁾ | 25 | - | - | 0.5 |
| Example 35 | Acrylic | 5 | Epoxy-based silane coupling agent⁽²⁾ | 15 | Silica sol (10nm) | 100 | 0.9 |
| Example 36 | Acrylic | 95 | Epoxy-based silane coupling agent⁽²⁾ | 25 | Silica sol (10nm) | 120 | 1.5 |
| Example 37 | Styrene | 75 | Epoxy-based silane coupling agent⁽²⁾ | 15 | Silica sol (15nm) | 80 | 1.0 |
| Comparative Example 1 | Silica sol (20nm)50:Urethane100 | | | | | | 1.2 |
| Comparative Example 2 | Acrylic | | | | | | 1.5 |
| Comparative Example 3 | Acrylic | 70 | - | - | - | - | 1.0 |
| Comparative Example 4 | Acrylic | 70 | Epoxy-based silane coupling agent⁽²⁾ | 0.3 | Li silicate | 10 | 0.7 |
| Comparative Example 5 | Acrylic | 70 | Epoxy-based silane coupling agent⁽²⁾ | 55 | Silica sol (10nm) | 120 | 0.9 |
| Comparative Example6 | Acrylic(3) | 75 | - | - | - | - | 0.8 |
| Comparative Example 7 | Acrylic(3) | 75 | Epoxy-based silane coupling agent⁽²⁾ | 25 | - | - | 0.8 |
| Reference Example | Cr-coating (Acrylic 100 : Magnesium bichromate 350) | | | | | | 0.9 |

| | | | | | | | |
|---|---|---|---|---|---|---|---|
| (1) Methylated melamine (Cymel 303, manufactured by Cyanamid Japan Ltd.) (2) γ-glycydoxy-propyltrimethoxysilane (epoxy-based) (3) Applied coating liquid did not copolymerize polysiloxane with acrylic in advance. (4) Added amount (parts by weight) to 100 parts by weight of solid content of the polysiloxane polymer | | | | | | | |

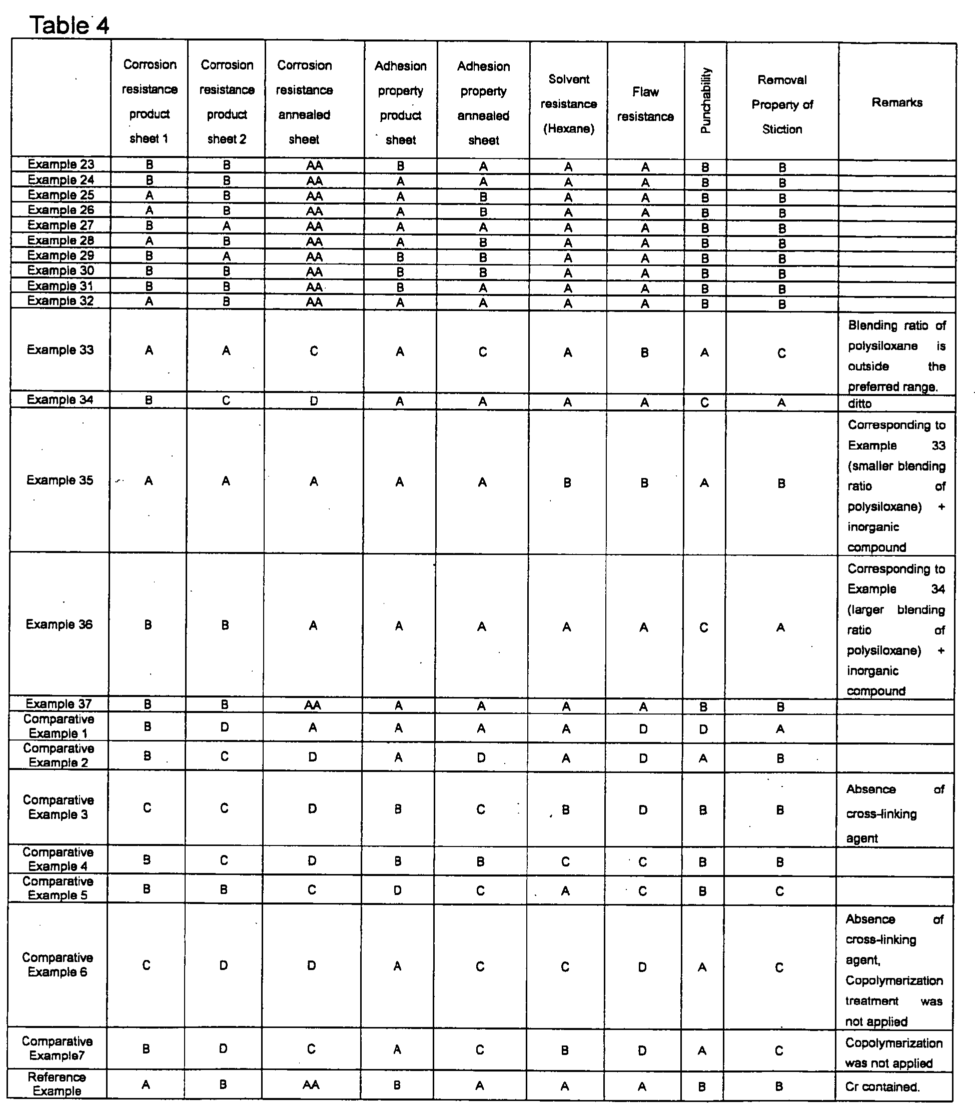

As seen in Tables 1 to 4, Examples of the present invention gave excellent corrosion resistance, adhesion property, solvent resistance, flaw resistance, punchability, and removal property of stiction. In particular, Examples of the present invention giving preferable range of polysiloxane blending ratio further improved the above characteristics. To the contrary, Comparative Examples deteriorated one or more of corrosion resistance, adhesion property, solvent resistance, flaw resistance, punchability, and removal property of stiction.

### INDUSTRIAL APPLICABILITY

The present invention provides an electrical steel sheet having an insulation coating giving excellent corrosion resistance and punchability. The electrical steel sheet having the insulation coating according to the present invention does not contain chromium, and gives performances such as corrosion resistance and punchability equivalent to or higher than those of Cr-containing insulation coating. Consequently, the present invention is friendly to environment not only as the final products but also during the manufacturing process, and allows wide use including motors and transformers, thus the present invention is the one profitable in industrial point of view.

## Claims

1. An electrical steel sheet having an insulation coating prepared by applying a coating liquid on the surface of an electrical steel sheet, followed by baking, which coating liquid contains 100 parts by weight of polysiloxane polymer prepared by copolymerizing polysiloxane with one or more resins selected from the group consisting of acrylic resin, styrene resin, vinyl acetate resin, polyester resin, urethane resin, polyethylene resin, polypropylene resin, polyamide resin, polycarbonate resin, phenol resin, alkyd resin, and epoxy resin, as the organic resin, and 1 to 50 parts by weight in total of one or more compounds selected from the group consisting of melamine, isocyanate, silane coupling agent, and oxadoline, as the cross-linking agent.

2. The electrical steel sheet having the insulation coating according to claim 1, wherein the insulation coating contains one or more compounds selected from the group consisting of silica, silicate, alumina, titania, tin oxide, cerium oxide, antimony oxide, tungsten oxide, and molybdenum oxide, as the inorganic compound, by an amount of 75% by mass or less to the total solid content in the coating.

3. The electrical steel sheet having the insulation coating according to claim 1 or claim 2, wherein the blending ratio of the polysiloxane to the total solid content in the insulation coating is 10% by mass or more and 90% by mass or less as SiO₂.

4. A method for manufacturing an electrical steel sheet having an insulation coating, comprising the steps of: applying a coating liquid on the surface of an electrical steel sheet, which coating liquid contains 100 parts by weight of polysiloxane polymer prepared by copolymerizing polysiloxane with one or more resins selected from the group consisting of acrylic resin, styrene resin, vinyl acetate resin, polyester resin, urethane resin, polyethylene resin, polypropylene resin, polyamide resin, polycarbonate resin, phenol resin, alkyd resin, and epoxy resin, as the organic resin, and 1 to 50 parts by weigh of one or more compounds selected from the group consisting of melamine, isocyanate, silane coupling agent, and oxadoline, as the cross-linking agent; and baking the electrical steel sheet with the coating liquid applied on the electrical steel sheet.
